# EUROPEAN PATENT SPECIFICATION

(11) **EP 3 568 587 B1**
(45) Date of publication and mention of the grant of the patent: **25.11.2020**
(21) Application number: 17816514.8
(22) Date of filing: 27.11.2017
(51) Int. Cl.: F03D 1/06

(54) **WIND TURBINE BLADE, WIND TURBINE AND METHOD FOR PRODUCING A WIND TURBINE BLADE**
WINDTURBINENROTORBLATT, WINDTURBINE UND VERFAHREN ZUR HERSTELLUNG EINES WINDTURBINENROTORBLATTS
PALE D'ÉOLIENNE, ÉOLIENNE ET PROCÉDÉ DE PRODUCTION DE PALE D'ÉOLIENNE

(30) Priority: 17.02.2017 DE 102017202617
(43) Date of publication of application: 20.11.2019
(73) Proprietor: Siemens Gamesa Renewable Energy A/S, 7330 Brande (DK)
(72) Inventor: NIELSEN, Per, 9310 Vodskov (DK)
(74) Representative: Aspacher, Karl-Georg
(86) International application number: PCT/EP2017/080452
(87) International publication number: WO 2018/149526

(56) References cited:
- DE-A1-102011 082 664
- US-A1- 2011 187 115
- US-A1- 2012 027 612
- US-A1- 2012 027 615

## Description

The present invention relates to a wind turbine blade for a wind turbine. Further, the present invention relates to a wind turbine. Furthermore, present invention relates to a method for producing a wind turbine blade.

Modern wind turbine rotor blades are built from fiber-reinforced plastics. A rotor blade typically comprises an airfoil having a rounded leading edge and a sharp trailing edge. The rotor blade is connected with its blade root to a hub of the wind turbine. The rotor blade is connected to the hub by means of a pitch bearing that allows a pitch movement of the rotor blade. Long rotor blades experiences high wind forces.

Rotor blades may be made of two half shells connected to each other. Further, a shear web may be arranged between the two half shells to reinforce the rotor blade. The shear web may be connected to the blade shells by means of spar caps which are connected to an inner surface of the blade shells.

US 2012/0027612 A1 shows a wind turbine blade comprising a lower shell member, a spar cap having a female member and a shear web having a male member. The shear web is connected to the shell member by means of the spar cap arranged between the shear web and the shell member. The male member is fitted into the female member.

US 2011/0187115 A1, US 2012/0027615 A1 and DE 10 2011 082 664 A1 show further wind turbine blades.

It is one object of the present invention to provide an improved wind turbine blade, an improved wind turbine and an improved method for producing a wind turbine blade.

This is solved by the features of claim **1.** Accordingly, a wind turbine blade for a wind turbine is provided. The wind turbine blade comprises a blade shell having an inner surface, a shear web having an end and a male portion protruding from the end, and a spar cap having a female portion receiving the male portion of the shear web, wherein an end face of the male portion is attached to the inner surface of the blade shell.

In contrast to known wind turbine blades, the shear web is directly attached to the blade shell and, additionally, the shear web is connected to the blade shell by means of the spar cap. Thus, a distance between the blade shells is well defined. At the same time, a reliable connection between the shear web and the blade shell is provided.

Preferably, the wind turbine blade comprises a first blade shell and a second blade shell which are connected to each other to form the outer shell of the wind turbine blade facing the environment of the wind turbine. An inner surface of the first blade shell and an inner surface of the second blade shell are preferably surrounding an inner space of the wind turbine blade.

The "shear web" means a support structure of the wind turbine blade. Preferably, the shear web is configured to prevent crippling or buckling of the wind turbine blade. Preferably, the shear web is forming a wall, rib or stringer arranged between the inner surface of the first blade shell and the inner surface of the second blade shell and extending in the longitudinal direction of the wind turbine blade. The "end" of the shear web means an end of the shear web adjacent to the inner surface of the blade shell and/or the spar cap. The "male portion" means a protrusion protruding from the end of the shear web towards the inner surface of the blade shell. Preferably, the shear web having one end adjacent to the inner surface of the first blade shell and/or a first spar cap and another end adjacent to the inner surface of the second blade shell and/or a second spar cap. Preferably, a first male portion protrudes from the one end of the shear web and a second male portion protrudes from the other end of the shear web. Preferably, the shear web is provided as a one-piece body, e.g. made of composite material, in particular fiber reinforced plastic material, and/or wood (e.g. plywood).

The "spar cap" means a receptacle configured to receive and to attach the shear web, in particular an end portion of the shear web, to the blade shell. Preferably, the spar cap is made of a composite material, in particular fiber reinforced plastic material, and/or wood (e.g. plywood). The "female portion" means a space arranged inside the spar cap which is configured to receive the male portion. Preferably, the female portion is a channel or gap arranged inside the spar cap towards the inner surface of the blade shell.

The spar cap comprises a base attached to the inner surface of the blade shell and walls protruding from the base sandwiching the shear web therebetween.

Thus, a suitable receptacle for the end portion of the shear web can be provided. Preferably, the walls are formed integrally with the base forming a one-piece body. Preferably, the base comprises a supporting surface which supports the end of the shear web. Preferably, a first wall and a second wall extend in the longitudinal direction of the wind turbine blade and sandwich the shear web, in particular the end portion of the shear web. Preferably, the walls become wider towards the base. Preferably, the walls have a tapered shape.

According to a further embodiment, the shear web is, in a transversal direction of the shear web, adhesively attached to the walls.

This has the advantage that a reliable connection between the shear web and the spar cap, in particular its walls, can be provided. Preferably, the transversal direction to the shear web is arranged perpendicular to the longitudinal direction of the wind turbine blade.

According to a further embodiment, the walls of the spar cap are spaced apart from the shear web forming a reservoir filled with adhesive on either side.

Thus, sufficient adhesive can accumulate inside the reservoir to provide a resistant bond between the walls and shear web. Preferably, a first reservoir at one side of the shear web and a second reservoir at the other side of the shear web is provided. Preferably, each reservoir is defined by an inner surface of the wall facing the shear web, an outer surface of the shear web facing the inner surface of the wall and a surface of the base facing away from the inner surface of the bade shell. Alternatively, only one of said reservoirs is provided.

According to a further embodiment, the reservoirs taper down in width towards a middle of the shear web.

The "middle of the shear web" means a middle arranged away from the spar cap. Thus, the inner surfaces of the walls facing the shear web undercut the spar cap looking from the middle of shear web. This has the advantage that a strong interface between the spar cap and the shear web is provided since the adhesive is formed in a wedge-shape due to the tapered reservoirs. Once the adhesive hardens, wedges of hardened adhesive are provided engaging the spar cap walls.

The female portion is formed at the base of the spar cap.

According to a further embodiment, the end face of the male portion is adhesively attached to the inner surface of the blade shell.

Thus, the shear web is both directly adhesively connected to the inner surface of the blade shell and indirectly connected to the inner surface of the blade shell by means of the spar cap. Preferably, the male portion is adhesively attached to a surface of the female portion adjacent to the male potion.

According to a further embodiment, the base of the spar cap is adhesively attached to the inner surface of the blade shell.

Thus, a reliable bond between the spar cap and the blade shell can be provided.

According to a further embodiment, the wind turbine blade comprises fiber material covering the blade shell, the spar cap and the shear web to form a fiber reinforced structure.

This has the advantage that the structural strength of the wind turbine blade is further increased. Preferably, the fiber material is attached to the inner surface of the blade shell. The fiber material may comprise a lay-up of fibers and resin. The fibers may be infused with the resin, or prepreg (preimpregnated) fiber material may be used.

Further, a wind turbine comprising such a wind turbine blade is provided.

"Wind turbine" presently refers to an apparatus converting the wind's kinetic energy into rotational energy, which may again be converted to electrical energy by the apparatus. Furthermore, a method for producing a wind turbine blade, in particular such a wind turbine blade, for a wind turbine comprising the following steps: a) providing a blade shell having an inner surface, b) providing a shear web having an end and a male portion protruding from the end, c) providing a spar cap having a female portion configured to receive the male portion of the shear web, d) fitting the male portion of the shear web into the female portion of the spar cap, and e) attaching an end face of the male portion of the shear web to the inner surface of the blade shell.

Preferably, a first blade shell and a second blade shell are provided in step a). Preferably, a first spar cap and a second spar cap are provided in step c).

According to an embodiment, prior to step d), a receptacle formed by the spar cap is filled with an adhesive and, in step d), the end of the spar cap including the male portion is inserted into the receptacle displacing the adhesive.

According to a further embodiment, the adhesive is displaced towards either side of the shear web forming corresponding reservoirs.

According to a further embodiment, the reservoirs filled with adhesive, once hardened, engage the spar cap on both sides of the shear web.

According to a further embodiment, the blade shell, the spar cap and the shear web are covered by fiber material to form a fiber reinforced structure.

The embodiments and features described with reference to the wind turbine blade of the present invention apply mutatis mutandis to the method for producing the wind turbine blade of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a perspective view of a wind turbine according to one embodiment;
Fig. 2 shows a perspective view of a wind turbine blade of the wind turbine according to Fig. 1;
Fig. 3 shows a cross-sectional view III-III from Fig. 2;
Fig. 4 shows a detail view IV from Fig. 3 in accordance with one embodiment;
Fig. 5 shows a detail view IV from Fig. 3 in accordance with a further embodiment;
Fig. 6 shows a detail view IV from Fig. 3 in accordance with a further embodiment;
Fig. 7 shows a detail view IV from Fig. 3 in accordance with a further embodiment;
Fig. 8 shows a detail view IV from Fig. 3 in accordance with a further embodiment;
Fig. 9 shows, in a cross-sectional view, a shear web of the wind turbine blade according to Fig. 7; and
Fig. 10 shows a block diagram of a method for producing the wind turbine blade.

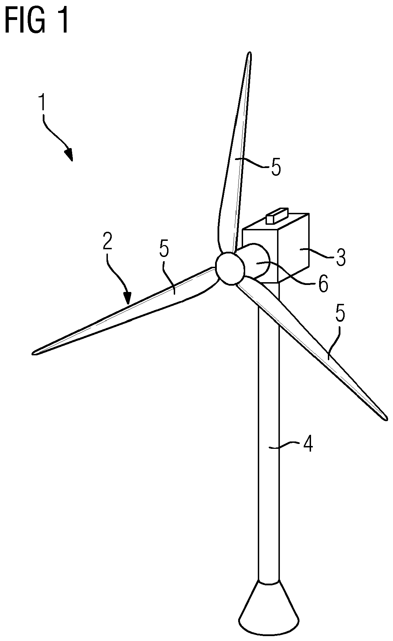

In the Figures, like reference numerals designate like or functionally equivalent elements, unless otherwise indicated. Fig. 1 shows a wind turbine 1. The wind turbine 1 comprises a rotor 2 connected to a generator (not shown) arranged inside a nacelle 3. The nacelle 3 is arranged at the upper end of a tower 4 of the wind turbine 1.

The rotor 2 comprises three rotor blades 5. The rotor blades 5 are connected to a hub 6 of the wind turbine 1. Rotors 2 of this kind may have diameters ranging from, for example, 30 to 200 meters or even more. The rotor blades 5 are subjected to high wind loads. At the same time, the rotor blades 5 need to be lightweight. For these reasons, rotor blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

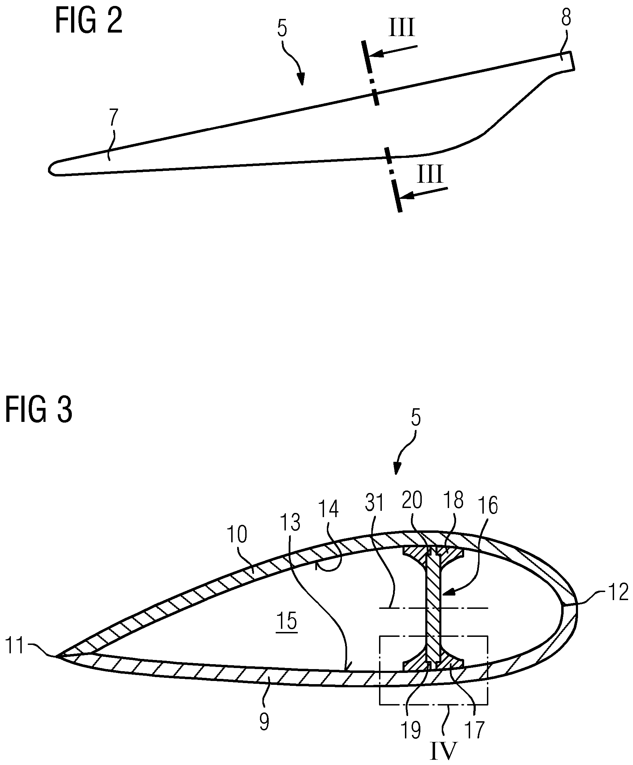

Fig. 2 shows a rotor blade 5. The rotor blade 5 comprises an aerodynamically designed portion 7 which is shaped for optimum exploitation of the wind energy and a blade root 8 for connecting the rotor blade 5 to the hub 6.

Fig. 3 shows a cross-sectional view III-III from Fig. 2. The wind turbine blade 5 comprises a first blade shell 9 and a second blade shell 10 which are connected together at one side 11 of the wind turbine blade 5, in particular at a trailing edge, and at the other side 12 of the wind turbine blade 5, in particular at a leading edge, to form the outer shell of the wind turbine blade 5. The blade shells 9, 10 may comprise composite fiber material. Further, the first blade shell 9 and the second blade shell 10 may be glued together.

The first blade shell 9 comprises an inner surface 13 and the second blade shell 10 comprises an inner surface 14, wherein an inner space 15 of the wind turbine blade 5 is defined by the inner surfaces 13, 14. A shear web 16 is located inside the inner space 15 extending from the inner surface 13 of the first blade shell 9 to the inner surface 14 of the second blade shell 10. The wind turbine blade 5 further comprises a first spar cap 17 attached to the inner surface 13 of the first blade shell 9 and a second spar cap 18 attached to the inner surface 14 of the second blade shell 10. One end 19 of the shear web 16 is connected to the inner surface 13 of the first blade shell 9 by means of the first spar cap 17 and the other end 20 of the shear web 16 is connected to the inner surface 14 of the second shell 10 by means of the second spar cap 18.

The shear web 16 is forming a support structure preventing breaking or crippling of the wind turbine blade 5. Further, a second shear web (not shown) may be located inside the inner space 15 extending from the inner surface 13 of the first blade shell 9 to the inner surface 14 of the second blade shell 10. The second shear web may be arranged parallel to the first shear web 16 and may have an identical connection to the blade shells 9, 10.

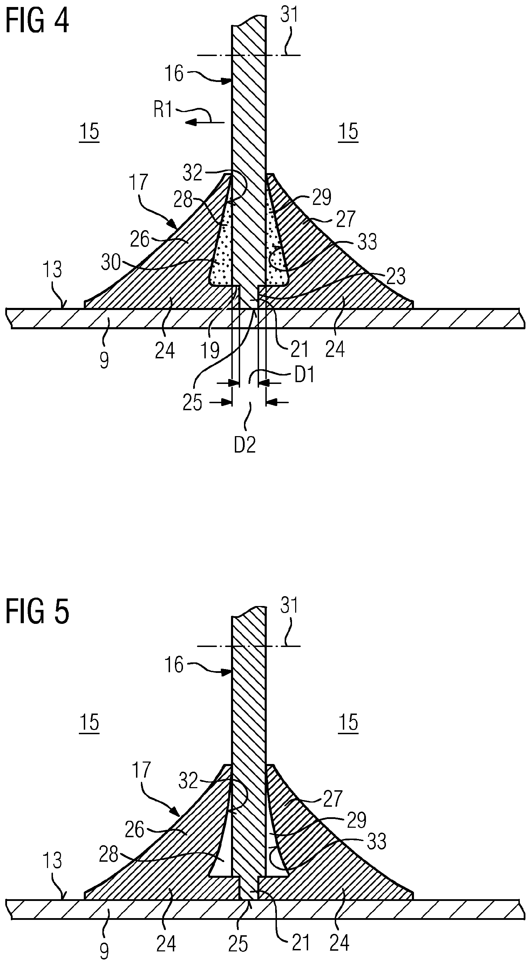

Fig. 4 shows a detail view IV from Fig. 3 in accordance with one embodiment. A male portion 21 protrudes from the end 19. The male portion 21 has a first thickness D1. The end 19 has a second thickness D2, wherein the first thickness D1 is smaller than the second thickness D2.

The spar cap 17 has a female portion 23 receiving the male portion 21 of the shear web 16. The female portion 23 is a channel or gap reaching all the way through the spar cap 17 towards the inner surface 13 of the first blade shell 9 and is provided at a base 24 of the spar cap 17. The base 24 is adhesively attached to the inner surface 13 of the first blade shell 9. An end face 25 of the male portion 21 is adhesively attached to the inner surface 13 of the first blade shell 9. Alternatively, the end face 25 only touches the inner surface 13 of the blade shell 9.

Further, the spar cap 17 comprises a first wall 26 and a second wall 27 protruding from the base 24 sandwiching the end 19 of the shear web 16 therebetween. Thus, the female portion 23 is formed at the base 24 between the first wall 26 and the second wall 27. The walls 26, 27 become wider towards the base 24.

The walls 26, 27 of the spar cap 17 are spaced apart from the shear web 16 forming a reservoir 28, 29 filled with adhesive 30 on either side. Thus, the shear web 16 is, in a transversal direction R1 of the shear web 16, adhesively attached to the walls 26, 27. The reservoirs 28, 29 taper down in width towards a middle 31 (shown as dash-dot-line) of the shear web 16. "Middle" means midway of the extension of the shear web 16 from the first blade shell 9 to the second blade shell 10. An inner surface 32 of the first wall 26 is formed with an undercut such that the reservoir 28 widens towards the base 24 when looking from the middle 31 of the shear web 16. Further, an inner surface 33 is formed with an undercut such that the reservoir 29 widens towards the base 24 when looking from the middle 31 of the shear web 16. The inner surface 32 and the inner surface 33 have a straight contour in a cross-sectional view (as shown in Fig. 4) extending towards the base 24. Preferably, a shortest distance between the inner surfaces 32, 33 equals to the thickness D2 of the end 19 of the shear web 16. Thus, the surfaces 32, 33 may touch the shear web 16 at both sides of the shear web 16.

Once the adhesive 30 hardens, wedges of hardened adhesive 30 are formed preventing a separation the shear web 16 and the spar cap 17. The wedges of hardened adhesive 30 have a triangular shape in a cross-sectional view.

Fig. 5 shows a detail view IV from Fig. 3 in accordance with a further embodiment. By contrast to Fig. 4, the inner surfaces 32, 33 of the walls 26, 27 facing the shear web 16 have a convex shape as seen from the shear web 16. Thus, the walls 26, 27 forming a tight receptacle for the end 19 of the shear web 16.

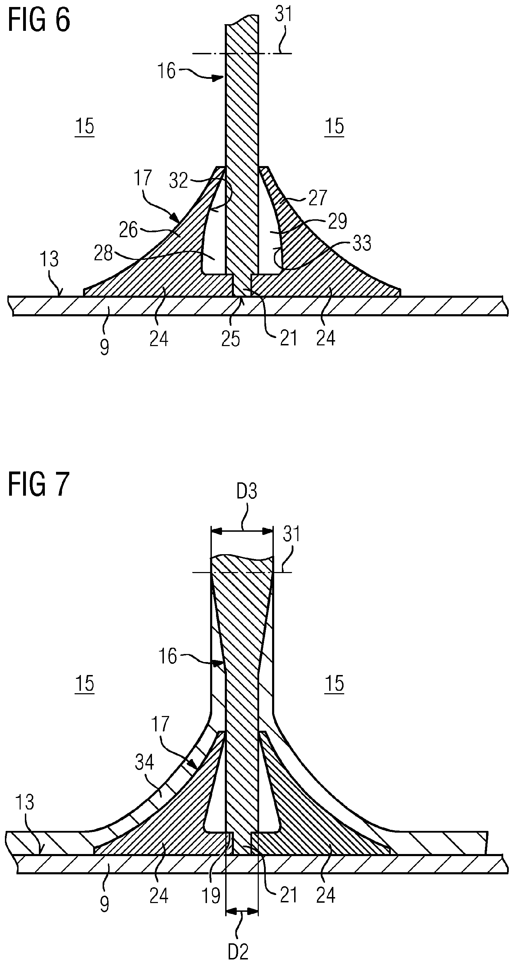

Fig. 6 shows a detail view IV from Fig. 3 in accordance with a further embodiment. By contrast to Fig. 4, the inner surfaces 32, 33 of the walls 26, 27 facing the shear web 16 have a concave shape as seen from the shear web 16. Thus, the walls 26, 27 form larger reservoirs 28, 29 (compared to Fig. 4 and 5).

Fig. 7 shows a detail view IV from Fig. 3 in accordance with a further embodiment. The wind turbine blade 5 further comprises fiber composite material 34 covering the inner surface 13 of the blade shell 9, the spar cap 17 and the shear web 16 to form a fiber reinforced structure. Further, the middle 31 of the shear web 16 may have a third thickness D3. The second thickness D2 of the end 19 of the shear web 16 is smaller than the third thickness D3 of the middle 31 of the shear web 16. The thickness of the shear web 16 tapers down from the middle 31 of the shear web 16 towards the end 19 of the shear web 16.

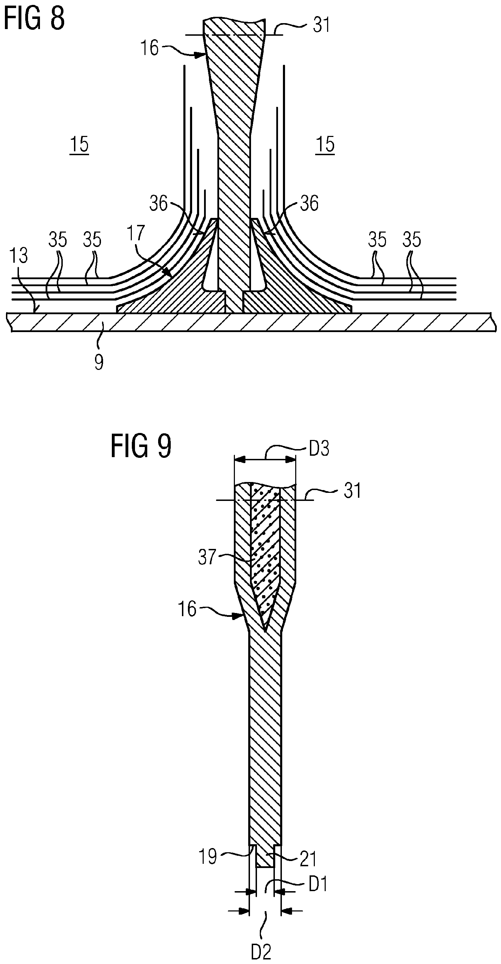

Fig. 8 shows a detail view IV from Fig. 3 in accordance with a further embodiment. The wind turbine blade 5 comprises a lay-up of unidirectional fiber mats 35. The fiber mats 35 cover the inner surface 13 of the blade shell 9 and an outer surface 36 of the spar cap 17. Furthermore, the upper fiber mats 35 facing the inner space 15 are designed longer than the lower fiber mats 35 facing the inner surface 13 of the blade shell 9.

Fig. 9 shows the shear web 16 of Fig. 7 in a cross-sectional view. The shear web 16 comprises an insert 37 surrounded by a base material (e.g. fiber composite material) of the shear web 16. The insert 37 may be a polymer or plywood plate 37. The insert 17 is arranged in the middle 31 of the shear web 16 at the thickness D3.

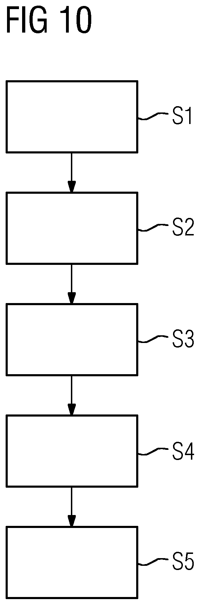

Fig. 10 shows a block diagram of a method for producing the wind turbine blade.

In a step S1, a blade shell 9 having an inner surface 13 is provided. In a step S2, a shear web 16 having an end 19 and a male portion 21 protruding from the end 19 is provided. In a step S3, a spar cap 17 having a female portion 23 configured to receive the male portion 21 of the shear web 16 is provided. In a step S4, the male portion 21 of the shear web 16 is fitted into the female portion 23 of the spar cap 17. In a step S5 an end face 25 of the male portion 21 of the shear web 16 is attached to the inner surface 13 of the blade shell 9.

Prior to step S4, a receptacle formed by the spar cap 17 is filled with an adhesive 30 and, in step S4, the end 19 of the spar cap 17 including the male portion 21 is inserted into the receptacle displacing the adhesive 30.

The adhesive 30 is displaced towards either side of the shear web 16 forming corresponding reservoirs 28, 29.

The reservoirs 28, 29 filled with adhesive 30, once hardened, engage the spar cap 17 on both sides of the shear web 16.

The blade shell 9, the spar cap 17 and the shear web 16 are covered by fiber material 34 to form a fiber reinforced structure.

The embodiments and features described with reference to Fig. 1 to 9 regarding the wind turbine blade apply mutatis mutandis to the method for producing the wind turbine blade.

Although the present invention has been described in accordance with preferred embodiments, it is obvious for the person skilled in the art that modifications are possible in all embodiments.

## Claims

1. A wind turbine blade (5) for a wind turbine (1), comprising
a blade shell (9) having an inner surface (13),
a shear web (16) having an end (19) and a male portion (21) protruding from the end (19), and
a spar cap (17) having a female portion (23) receiving the male portion (21) of the shear web (16), wherein an end face (25) of the male portion (21) is attached to the inner surface (13) of the blade shell (9), wherein the spar cap (17) comprises a base (24) attached to the inner surface (13) of the blade shell (9) and walls (26, 27) protruding from the base (24) sandwiching the shear web (16) therebetween, and wherein the female portion (23) is formed at the base (24) of the spar cap (17).

2. The wind turbine blade according to claim 1, wherein the shear web (16) is, in a transversal direction (R1) of the shear web (16), adhesively attached to the walls (26, 27).

3. The wind turbine blade according to claim 2, wherein the walls (26, 27) of the spar cap (17) are spaced apart from the shear web (16) forming a reservoir (28, 29) filled with adhesive (30) on either side.

4. The wind turbine blade according to claim 3, wherein the reservoirs (28, 29) taper down in width towards the middle (31) of the shear web (16).

5. The wind turbine blade according to one of claims 1 - 4, wherein the end face (25) of the male portion (21) is adhesively attached to the inner surface (13) of the blade shell (9).

6. The wind turbine blade according to one of claims 1 - 5, wherein the base (24) of the spar cap (17) is adhesively attached to the inner surface (13) of the blade shell (9).

7. The wind turbine blade according to one of claims 1 - 6, further comprising fiber material (34) covering the blade shell (9), the spar cap (17) and the shear web (16) to form a fiber reinforced structure.

8. A wind turbine (1) comprising a wind turbine blade (5) according to one of claims 1 - 7.

9. A method for producing a wind turbine blade (5) according to one of claims 1 - 7 for a wind turbine (1) comprising the following steps:
a) providing (S1) a blade shell (9) having an inner surface (13),
b) providing (S2) a shear web (16) having an end (19) and a male portion (21) protruding from the end (19),
c) providing (S3) a spar cap (17) having a female portion (23) configured to receive the male portion (21) of the shear web (16),
d) fitting (S4) the male portion (21) of the shear web (16) into the female portion (23) of the spar cap (17), and
e) attaching (S5) an end face (25) of the male portion (21) of the shear web (16) to the inner surface (13) of the blade shell (9).

10. The method according to claim 9, wherein, prior to step d), a receptacle formed by the spar cap (17) is filled with an adhesive (30) and, in step d), the end (19) of the spar cap (17) including the male portion (21) is inserted into the receptacle displacing the adhesive (30).

11. The method according to claim 10, wherein the adhesive (30) is displaced towards either side of the shear web (16) forming corresponding reservoirs (28, 29).

12. The method according to claim 11, wherein the reservoirs (28, 29) filled with adhesive (30), once hardened, engage the spar cap (17) on both sides of the shear web (16).

13. The method according to one of claims 9 - 12, wherein the blade shell (9), the spar cap (17) and the shear web (16) are covered by fiber material (34) to form a fiber reinforced structure.

## Patentansprüche

1. Windturbinenrotorblatt (5) für eine Windturbine (1), das Folgendes umfasst:
einen Rotorblattmantel (9) mit einer Innenfläche (13),
einen Schersteg (16) mit einem Ende (19) und einem Steckabschnitt (21), der von dem Ende (19) vorsteht, und
einen Holmgurt (17) mit einem Aufnahmeabschnitt (23), der den Steckabschnitt (21) des Scherstegs (16) aufnimmt, wobei eine Stirnfläche (25) des Steckabschnitts (21) an der Innenfläche (13) des Rotorblattmantels (9) angebracht ist, wobei der Holmgurt (17) einen an der Innenfläche (13) des Rotorblattmantels (9) angebrachten Sockel (24) und von dem Sockel (24) vorstehende Wände (26, 27) umfasst, zwischen denen sich der Schersteg (16) befindet, und wobei der Aufnahmeabschnitt (23) an dem Sockel (24) des Holmgurts (17) ausgebildet ist.

2. Windturbinenrotorblatt nach Anspruch 1, wobei der Schersteg (16) in seiner Querrichtung (R1) an die Wände (26, 27) geklebt ist.

3. Windturbinenrotorblatt nach Anspruch 2, wobei die Wände (26, 27) des Holmgurts (17) von dem Schersteg (16) beabstandet sind und einen Speicher (28, 29) bilden, der auf beiden Seiten mit Klebstoff (30) gefüllt ist.

4. Windturbinenrotorblatt nach Anspruch 3, wobei sich die Breite der Speicher (28, 29) zur Mitte (31) des Scherstegs (16) hin verjüngt.

5. Windturbinenrotorblatt nach einem der Ansprüche 1 bis 4, wobei die Stirnfläche (25) des Steckabschnitts (21) an die Innenfläche (13) des Rotorblattmantels (9) geklebt ist.

6. Windturbinenrotorblatt nach einem der Ansprüche 1 bis 5, wobei der Sockel (24) des Holmgurts (17) an die Innenfläche (13) des Rotorblattmantels (9) geklebt ist.

7. Windturbinenrotorblatt nach einem der Ansprüche 1 bis 6, das ferner Fasermaterial (34) umfasst, welches den Rotorblattmantel (9), den Holmgurt (17) und den Schersteg (16) so bedeckt, dass eine faserverstärkte Konstruktion entsteht.

8. Windturbine (1) mit einem Windturbinenrotorblatt (5) nach einem der Ansprüche 1 bis 7.

9. Verfahren zum Herstellen eines Windturbinenrotorblatts (5) nach einem der Ansprüche 1 bis 7 für eine Windturbine (1) mit folgenden Schritten:
a) Bereitstellen (S1) eines Rotorblattmantels (9) mit einer Innenfläche (13),
b) Bereitstellen (S2) eines Scherstegs (16) mit einem Ende (19) und einem Steckabschnitt (21), der von dem Ende (19) vorsteht,
c) Bereitstellen (S3) eines Holmgurts (17) mit einem Aufnahmeabschnitt (23), der so konfiguriert ist, dass er den Steckabschnitt (21) des Scherstegs (16) aufnimmt,
d) Einführen (S4) des Steckabschnitts (21) des Scherstegs (16) in den Aufnahmeabschnitt (23) des Holmgurts (17) und
e) Anbringen (S5) einer Stirnfläche (25) des Steckabschnitts (21) des Scherstegs (16) an der Innenfläche (13) des Rotorblattmantels (9).

10. Verfahren nach Anspruch 9, wobei vor Schritt d) ein von dem Holmgurt (17) gebildeter Behälter mit einem Klebstoff (30) gefüllt und bei Schritt d) das Ende (19) des Holmgurts (17) mit dem Steckabschnitt (21) in den Behälter eingeführt wird und dabei den Klebstoff (30) verdrängt.

11. Verfahren nach Anspruch 10, wobei der Klebstoff (30) zu beiden Seiten des Scherstegs (16) hin verdrängt wird und dabei entsprechende Speicher (28, 29) gebildet werden.

12. Verfahren nach Anspruch 11, wobei die mit Klebstoff (30) gefüllten Speicher (28, 29) nach dem Aushärten zu beiden Seiten des Scherstegs (16) an dem Holmgurt (17) anliegen.

13. Verfahren nach einem der Ansprüche 9 bis 12, wobei der Rotorblattmantel (9), der Holmgurt (17) und der Schersteg (16) mit Fasermaterial (34) bedeckt werden, so dass eine faserverstärkte Konstruktion entsteht.

## Revendications

1. Pale d'éolienne (5) pour une éolienne (1), comprenant
une coque de pale (9) ayant une surface interne (13),
une bande de cisaillement (16) ayant une extrémité (19) et une partie mâle (21) faisant saillie à partir de l'extrémité (19), et
un capuchon de longeron (17) ayant une partie femelle (23) recevant la partie mâle (21) de la bande de cisaillement (16), dans laquelle une face d'extrémité (25) de la partie mâle (21) est attachée à la surface interne (13) de la coque de pale (9), dans laquelle le capuchon de longeron (17) comprend une base (24) attachée à la surface interne (13) de la coque de pale (9) et des parois (26, 27) faisant saillie à partir de la base (24) prenant en sandwich la bande de cisaillement (16) entre elles, et dans laquelle la partie femelle (23) est formée à la base (24) du capuchon de longeron (17).

2. Pale d'éolienne selon la revendication 1, dans laquelle la bande de cisaillement (16) est, dans une direction transversale (R1) de la bande de cisaillement (16), attachée de manière adhésive aux parois (26, 27).

3. Pale d'éolienne selon la revendication 2, dans laquelle les parois (26, 27) du capuchon de longeron (17) sont espacées de la bande de cisaillement (16) en formant un réservoir (28, 29) rempli avec de l'adhésif (30) sur chaque côté.

4. Pale d'éolienne selon la revendication 3, dans laquelle les réservoirs (28, 29) se rétrécissent en largeur en direction du milieu (31) de la bande de cisaillement (16).

5. Pale d'éolienne selon l'une des revendications 1 à 4, dans laquelle la face d'extrémité (25) de la partie mâle (21) est attachée de manière adhésive à la surface interne (13) de la coque de pale (9).

6. Pale d'éolienne selon l'une des revendications 1 à 5, dans laquelle la base (24) du capuchon de longeron (17) est attachée de manière adhésive à la surface interne (13) de la coque de pale (9).

7. Pale d'éolienne selon l'une des revendications 1 à 6, comprenant en outre un matériau fibreux (34) recouvrant la coque de pale (9), le capuchon de longeron (17) et la bande de cisaillement (16) pour former une structure renforcée par des fibres.

8. Éolienne (1) comprenant une pale d'éolienne (5) selon l'une des revendications 1 à 7.

9. Procédé de production d'une pale d'éolienne (5) selon l'une des revendications 1 à 7 pour une éolienne (1) comprenant les étapes suivantes :
a) la fourniture (S1) d'une coque de pale (9) ayant une surface interne (13),
b) la fourniture (S2) d'une bande de cisaillement (16) ayant une extrémité (19) et une partie mâle (21) faisant saillie à partir de l'extrémité (19),
c) la fourniture (S3) d'un capuchon de longeron (17) ayant une partie femelle (23) configurée pour recevoir la partie mâle (21) de la bande de cisaillement (16),
d) l'ajustement (S4) de la partie mâle (21) de la bande de cisaillement (16) dans la partie femelle (23) du capuchon de longeron (17), et
e) l'attachement (S5) d'une face d'extrémité (25) de la partie mâle (21) de la bande de cisaillement (16) à la surface interne (13) de la coque de pale (9).

10. Procédé selon la revendication 9, dans lequel, avant l'étape d), un réceptacle formé par le capuchon de longeron (17) est rempli avec un adhésif (30) et, à l'étape d), l'extrémité (19) du capuchon de longeron (17) incluant la partie mâle (21) est insérée dans le réceptacle en déplaçant l'adhésif (30).

11. Procédé selon la revendication 10, dans lequel l'adhésif (30) est déplacé en direction de chaque côté de la bande de cisaillement (16) en formant des réservoirs correspondants (28, 29).

12. Procédé selon la revendication 11, dans lequel les réservoirs (28, 29) remplis avec de l'adhésif (30), une fois durcis, viennent en prise avec le capuchon de longeron (17) sur les deux côtés de la bande de cisaillement (16).

13. Procédé selon l'une des revendications 9 à 12, dans lequel la coque de pale (9), le capuchon de longeron (17) et la bande de cisaillement (16) sont recouverts par un matériau fibreux (34) pour former une structure renforcée par des fibres.
